# EUROPÄISCHE PATENTSCHRIFT

(11) **EP 3 575 666 B1**
(45) Veröffentlichungstag und Bekanntmachung des Hinweises auf die Patenterteilung: **13.07.2022**
(21) Anmeldenummer: 19154366.9
(22) Anmeldetag: 30.01.2019
(51) Int. Cl.: F16P 3/14

(54) **VORRICHTUNG ZUR ABSICHERUNG EINES GEFAHRENBEREICHS EINER ANLAGE**
DEVICE FOR PROTECTING A HAZARDOUS AREA OF A SYSTEM
DISPOSITIF DE SÉCURISATION D'UNE ZONE À RISQUE D'UNE INSTALLATION

(30) Priorität: 29.05.2018 DE 202018103012 U
(43) Veröffentlichungstag der Anmeldung: 04.12.2019
(73) Patentinhaber: Leuze electronic GmbH + Co. KG, 73277 Owen/Teck (DE)
(72) Erfinder: Eder, Alexander, 86928 Hofstetten (DE); Storr, Mathias, 72622 Nürtingen (DE); Rohbeck, Volker, 85244 Röhrmoos (DE)
(74) Vertreter: Ruckh, Rainer Gerhard

(56) Entgegenhaltungen:
- DE-A1-102009 034 848
- GB-A- 2 535 148
- US-A1- 2015 287 200

## Beschreibung

Die Erfindung betrifft eine Vorrichtung zur Absicherung eines Gefahrenbereichs einer Anlage.

Derartige Vorrichtungen werden im Bereich der Sicherheitstechnik eingesetzt, um Personen und Objekte vor einem gefahrbringenden Betrieb, insbesondere gefahrbringenden Bewegungen von Teilen der Anlage, zu schützen.

Zur Absicherung des Gefahrenbereichs einer Anlage weist die Vorrichtung bekanntermaßen eine Sensoranordnung auf, mit der ein Schutzbereich überwacht wird, der an den Gefahrenbereich angepasst ist. Die Sensoranordnung weist einen fehlersicheren Aufbau auf, so dass sie die Anforderungen der relevanten Sicherheitsnormen für eine Gefahrenbereichsüberwachung erfüllt. Mit der Sensoranordnung wird eine Sicherheitsfunktion derart realisiert, dass dann, wenn mit dieser ein Objekteingriff im Schutzbereich registriert wird, ein Schaltsignal generiert wird, das zum Stillsetzen des gefahrbringenden Betriebs der Anlage führt. Dabei kann die Anlage komplett stillgesetzt werden, oder von dem Teil der Anlage, von der eine Gefährdung ausgeht.

Nachdem das Objekt, insbesondere eine Person, den Schutzbereich wieder verlassen hat, kann die Anlage wieder in Betrieb gesetzt werden. Bei bekannten Systemen kann der Wiederanlauf der Anlage nur dadurch erfolgen, dass eine Person, die den Gefahrenbereich einsehen kann, ein manuell betätigbares Betätigungselement betätigt.

Das Betätigungselement, das in Form einer Taste oder in Form eines von der Decke eines Raums hängenden Seils, an dem eine Person ziehen muss, um einen Schaltvorgang auszulösen, ist dabei an einem geeigneten Ort nahe des Gefahrenbereichs angeordnet.

Das Betätigen des Betätigungselements wird als störend und lästig empfunden, da die jeweilige Person sich zuerst zum Betätigungselement hinbewegen muss, um durch dessen Betätigung den Wiederanlauf der Anlage freizugeben. Aus der DE 10 2012 102 236 ist z.B. bekannt, dass die Anlage langsamer wird wenn Personen im Gefahrenbereich erkannt werden, welche Anlage wieder schneller wird, wenn sich die Personen aus dem Gefahrenbereich begeben.

Die US 2015/0287200 A1 betrifft ein Sicherheitskontrollsystem, bei welchem mit einer Kamera ein Überwachungsbereich überwacht wird. Aus den mit der Kamera aufgenommenen Bildern werden Bildausschnitte von einer Gefahrenquelle und von wenigstens einer Person, die sich im Überwachungsbereich aufhält, erzeugt. Anhand dieser Bildausschnitte wird die kürzeste Distanz zwischen der Gefahrenquelle und der Person ermittelt. Abhängig von dieser ermittelten kürzesten Distanz wird eine Sicherheitsfunktion ausgewählt. Durch die ausgewählte Sicherheitsfunktion wird ein Sicherheitssignal ausgegeben.

Der Erfindung liegt die Aufgabe zugrunde, eine Vorrichtung der eingangs genannten Art bereitzustellen, welche eine erhöhte Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Vorrichtung zur Absicherung eines Gefahrenbereichs einer von einer Steuerung gesteuerten Anlage. Mittels einer Sensoranordnung wird ein an den Gefahrenbereich angepasster Schutzbereich überwacht. Bei Erfassen eines in den Schutzbereich eindringenden Objekts wird mittels der Sensoranordnung ein Schaltsignal generiert, mittels dessen ein gefahrenbringender Betrieb der Anlage stillgesetzt ist. Mit der Sensoranordnung wird der Bewegungsablauf des Objekts bei Verlassen des Schutzbereichs erfasst. Bei Registrieren eines gültigen Bewegungsablaufs mittels der Sensoranordnung wird ein Freigabesignal generiert, mittels dessen der gefahrbringende Betrieb der Anlage wieder aktiviert ist.

Der Grundgedanke der Erfindung besteht darin, dass mit der Sensoranordnung nicht nur die bekannte Sicherheitsfunktion bereitgestellt wird, dass ein Objekteingriff im Schutzbereich festgestellt und so ein Stillsetzen des gefahrbringenden Betriebes der Anlage bewirkt wird, wobei der gefahrbringende Betrieb der Anlage den gesamten Betrieb oder nur einen Teil des Betriebs der Anlage umfassen kann. Erfindungsgemäß wird mit der Sensoranordnung eine zweite Sicherheitsfunktion derart bereitgestellt, dass abhängig von der Erfassung des Bewegungsablaufs eines Objekts bei Verlassen des Schutzbereichs mittels der Sensoranordnung ein automatischer Wiederanlauf der Anlage, das heißt ohne manuelle Betätigung eines Betätigungselements erfolgen kann. Mit automatischem Wideranlauf kann generell nur eine Wiederaufnahme des gefahrbringenden Betriebs der Anlage oder eine Wiederaufnahme des gesamten Betriebs der Anlage gemeint sein.

Dabei unterscheiden sich die beiden Sicherheitsfunktionen hinsichtlich der Art der Objekterkennung. Bei einem Objekteingriff im Schutzbereich, der zu einem Abschalten, das heißt Stillsetzen der Anlage führt, spielt es keine Rolle, welches Objekt an welchem Ort des Schutzbereichs erfasst wird. Aus Sicherheitsgründen muss nämlich jeder Objekteingriff im Schutzbereich sicher erfasst werden und ein Stillsetzen der Anlage bewirken.

Anders verhält es sich bei der zweiten Sicherheitsfunktion. Dort wird ein automatisches Wiederanlaufen der Anlage nur dann freigegeben, wenn sich das Objekt entsprechend seinem definierten, gültigen Bewegungsablauf aus dem Schutzbereich herausbewegt. Diese Bedingung kann dadurch noch verfeinert beziehungsweise erweitert werden, in dem für unterschiedliche Objekte unterschiedliche gültige Bewegungsabläufe definiert werden, was natürlich voraussetzt, dass die einzelnen Objekte mit der Sensoranordnung sicher voneinander unterschieden sind.

Dadurch, dass für den Wiederanlauf der Anlage das Erkennen eines definierten, gültigen Bewegungsablaufs eines Objekts bei Verlassen des Schutzbereichs gefordert wird, wird eine erhöhte Sicherheit, insbesondere einen Schutz gegen Manipulationen gefordert. Der oder jeder gültige Bewegungsablauf wird entsprechend den räumlichen Gegebenheiten der Anlage und deren Gefahrenbereich vorgegeben. Weiterhin wird der gültige Bewegungsablauf entsprechend der Vorschriften der geltenden Sicherheitsnormen gewählt. So wird beispielsweise der gültige Bewegungsablauf so definiert, dass ein eine unzulässige Manipulation darstellendes Hintertreten des Gefahrenbereichs ausgeschlossen wird.

Da somit ein automatischer Wiederanlauf der Anlage mittels der Sensoranordnung nur dann freigegeben wird, wenn für bestimmte Objekte bestimmte Bewegungsabläufe bei Verlassen des Schutzbereichs erkannt werden, gibt es auch Fallkonstellationen bei einem Herausbewegen eines Objekts aus dem Schutzbereich, die nicht zu einer Generierung des Freigabesignals und damit nicht zu einem automatischen Wiederanlauf der Anlage führen.

Deshalb ist vorteilhaft für einen Wiederanlauf der Anlage ein manuell betätigbares Betätigungselement vorgesehen.

Damit kann in Fällen, in denen kein automatischer Anlauf der Anlage möglich ist, eine Bedienperson in bekannter Weise durch manuelles Betätigen des Betätigungselements die Anlage wieder in Betrieb setzen.

Generell kann die Sensoranordnung einen oder mehrere Sensoren aufweisen.

Vorteilhaft kann der oder wenigstens ein Sensor als optischer Sensor, insbesondere als Kamera, Flächendistanzsensor oder Lichtvorhang ausgebildet sein. Mit derartigen optischen Sensoren können flächige oder sogar räumliche Bereiche überwacht werden. Damit kann mit diesen Sensoren eine ortsaufgelöste Objektdetektion im gesamten Schutzbereich durchgeführt werden.

Dies gilt auch für Sensoren in Form von Trittmattensensoren, die ebenso wie optische Sensoren zur Überwachung des Schutzbereichs eingesetzt werden können.

Gemäß einer ersten Variante der Erfindung wird in der Sensoranordnung selbst ein gültiger Bewegungsablauf erkannt und abhängig hierzu wird das Freigabesignal generiert.

In diesem Fall wird das Freigabesignal über einen sicheren Schaltausgang der Sensoranordnung an die Steuerung der Anlage ausgegeben, wobei vorteilhaft auch das Schaltsignal zum Stillsetzen der Anlage über diesen Schaltausgang ausgegeben wird.

Bei dieser Variante erfolgt somit die Verarbeitung der Sensorsignale der Sensoranordnung selbst, um dort das Freigabesignal zu generieren. Ist die Sensoranordnung von einem einzigen Sensor gebildet, so kann die Generierung des Freigabesignals in einer im Sensor integrierten oder diesem zugeordneten Auswerteeinheit erfolgen.

Ist die Sensoranordnung von mehreren Sensoren gebildet, erfolgt die Generierung in einer Auswerteeinheit eines Sensors oder in einer separaten, den Sensoren zugeordnete Rechnereinheit, wobei die Auswerteeinheit und die gegebenenfalls vorgesehene Rechnereinheit über fehlersichere Übertragungsstrecken Daten austauschen.

Gemäß einer weiteren Variante werden in der Sensoranordnung generierte Sensorsignale an die Steuerung ausgegeben. In der Steuerung wird das Freigabesignal bei Erkennen des gültigen Bewegungsablaufs generiert.

In diesem Fall werden vorteilhaft die Sensorsignale über ein sicheres Bussystem an die Steuerung übertragen.

Bei einem sicheren Bussystem erfolgt eine fehlersichere Übertragung von Daten. Die Fehlersicherheit wird durch geeignete Maßnahmen zur Fehleraufdeckung gewährleistet, beispielsweise durch Prüfsummen oder CRC-Prüfwerte für übertragene Datenwerte.

Vorteilhaft sind in der Sensoranordnung oder in der Steuerung Kriterien für den gültigen Bewegungsablauf hinterlegt.

Das Hinterlegen erfolgt beispielsweise durch nicht flüchtiges Speichern in einer Speichereinheit. Als Kriterium können beispielsweise einzelne charakteristische Stufen oder Schritte des Bewegungsablaufs definiert werden.

Insbesondere ist der Schutzbereich in Teilzonen unterteilt. Als Kriterium für den gültigen Bewegungsablauf sind vorgegebene zeitliche Abfolgen von Objekteingriffen in den Teilzonen definiert.

Die Teilzonen ermöglichen eine besonders vorteilhafte Definition von Kriterien eines gültigen Bewegungsablaufs. Durch eine zeitaufgelöste Erfassung, wann und in welchen Teilzonen ein Objekteingriff registriert wird, kann die Bewegungsrichtung und sogar die Geschwindigkeit eines Objekts im Schutzbereich erfasst werden. Schließlich kann durch eine Analyse, in wie vielen Teilzonen gleichzeitig ein Objekteingriff registriert wird, die Größe eines Objekts erfasst werden, wodurch auch Objekte voneinander unterschieden werden können.

Gemäß einer vorteilhaften Ausgestaltung enthält wenigstens eine erste Teilzone eine Grenze zum Gefahrenbereich der Anlage. Daran anschließend zu größeren Abständen zur Anlage hin, ist wenigstens eine zweite Teilzone vorhanden.

Durch Registrieren der Abfolge von Objekteingriffen mitten in den ersten und zweiten Teilzonen kann einfach und sicher ermittelt werden, ob sich ein Objekt auf den Gefahrenbereich der Anlage zubewegt oder sich von ihm entfernt, das heißt es wird sicher festgestellt, ob sich das Objekt aus dem Schutzbereich herausbewegt oder nicht.

Die Ausgestaltung kann dadurch noch verfeinert werden, dass mehrere nebeneinanderliegende erste und/oder zweite Teilzonen vorgesehen sind.

Durch die Analyse von Objekteingriffen in nebeneinanderliegenden Teilzonen können Informationen über die Ausdehnung eines Objekts erhalten werden. Insbesondere kann so eine Person von einem Fahrzeug unterschieden werden.

Die Erfindung wird im Folgenden anhand der Zeichnungen erläutert. Es zeigen:
- Figur 1: Erstes Ausführungsbeispiel einer Vorrichtung zur Absicherung eines Gefahrenbereichs einer Anlage.
- Figur 2: Zweites Ausführungsbeispiel einer Vorrichtung zur Absicherung eines Gefahrenbereichs einer Anlage.
- Figur 3: Drittes Ausführungsbeispiel einer Vorrichtung zur Absicherung eines Gefahrenbereichs einer Anlage.
- Figur 4: Viertes Ausführungsbeispiel einer Vorrichtung zur Absicherung eines Gefahrenbereichs einer Anlage.
- Figur 5: Erstes Ausführungsbeispiel einer Einteilung eines Schutzbereichs in Teilzonen für eine Vorrichtung gemäß den Figuren 1 - 4.
- Figur 6: Zweites Ausführungsbeispiel einer Einteilung eines Schutzbereichs in Teilzonen für eine Vorrichtung gemäß den Figuren 1 - 4.
- Figur 7: Drittes Ausführungsbeispiel einer Einteilung eines Schutzbereichs in Teilzonen für eine Vorrichtung gemäß den Figuren 1 - 4.
- Figur 8: Viertes Ausführungsbeispiel einer Einteilung eines Schutzbereichs in Teilzonen für eine Vorrichtung gemäß den Figuren 1 - 4.

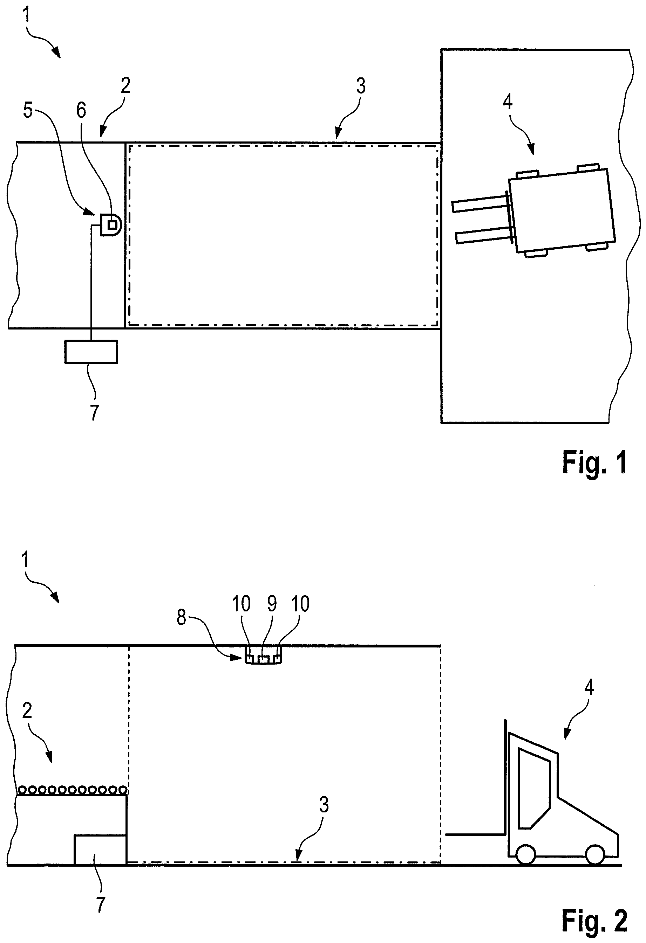

Figur 1 zeigt ein erstes Ausführungsbeispiel einer Vorrichtung 1 zur Absicherung eines Gefahrenbereichs 2 einer Anlage. Figur 1 zeigt den Gefahrenbereich 2 in einer Draufsicht von oben. Im Gefahrenbereich 2 führt die Anlage gefahrbringende Prozesse, insbesondere Bewegungen aus. Die Vorrichtung 1 sichert die Anlage dadurch, dass mit einer Sensoranordnung ein dem Gefahrenbereich 2 vorgelagerter Schutzbereich 3 überwacht wird. Der Schutzbereich 3 ist an seinen seitlichen Rändern durch nicht dargestellte Umzäunungen oder dergleichen gesichert, so dass über die seitlichen Ränder kein Zugang zum Schutzbereich 3 möglich ist. Ein Zugang zum Schutzbereich 3 kann somit nur über den im Gefahrenbereich 2 abgewandten Rand des Schutzbereichs 3 erfolgen. Dort können Objekte und Personen in den Schutzbereich 3 eintreten und so zum Gefahrenbereich 2 der Anlage gelangen. Als Beispiel für ein derartiges Objekt ist in Figur 1 ein Fahrzeug in Form eines Gabelstaplers 4 dargestellt.

Die den Schutzbereich 3 überwachende Sensoranordnung kann einen oder mehrere Sensoren aufweisen. Bei der Ausführungsform der Figur 1 ist die Sensoranordnung von einem optischen Sensor in Form eines Flächendistanzsensors 5 ausgebildet. Ein solcher Flächendistanzsensor 5 weist typisch einen Distanzsensor 6 mit einem Sendelichtstrahlen emittierenden Sendeelement und einem Empfangslichtstrahlen empfangenden Empfänger 16 auf. Die Distanzmessungen erfolgen zweckmäßig nach einem Impuls-Laufzeit-Verfahren oder einem Phasenmessverfahren. Durch die Integration des Distanzsensors 6 in einen rotierenden Messkopf oder durch das Vorsehen einer rotierenden Ablenkeinheit werden die Sendelichtstrahlen periodisch in einem Abtastbereich geführt, so dass mit dem Flächendistanzsensor 5 der gesamte Schutzbereich 3 erfasst wird und im gesamten Schutzbereich 3 die Positionen von Objekten bestimmt werden können. Hierzu weist der Flächendistanzsensor 5 eine nicht dargestellte Auswerteeinheit auf.

Jeder Sensor der Sensoranordnung, damit auch der Flächendistanzsensor 5, bildet einen Sicherheitssensor, der für den Einsatz im Bereich des Sicherheitstechnik geeignet ist und daher einen fehlersicheren Aufbau aufweist. Die erforderliche Fehlersicherheit kann beispielsweise durch eine redundant aufgebaute Auswerteeinheit in Form zweier sich zyklisch gegenseitig überwachenden Rechnereinheiten 18, 21 erreicht werden.

Die Sensoranordnung, im vorliegenden Fall der Flächendistanzsensor 5, ist an eine Steuerung 7 angeschlossen, die die Anlage steuert.

Mit der Sensoranordnung wird eine Sicherheitsfunktion derart ausgeführt, dass während des Betriebs der Anlage, insbesondere bei welchem ein gefahrbringender Betrieb in dem Gefahrenbereich 2 erfolgt, der Schutzbereich 3 überwacht wird. Wird mit der Sensoranordnung detektiert, dass ein Objekt in den Schutzbereich 3 eindringt, wird im Schutzbereich 3 ein Schaltsignal generiert, das über einen fehlersicheren Schaltausgang an die Steuerung 7 ausgegeben wird. Empfängt die Steuerung 7 dieses Schaltsignal, wird zumindest der gefahrbringende Betrieb der Anlage oder die gesamte Anlage stillgesetzt, wodurch Gefährdungen für Personen und Objekte ausgeschlossen werden.

Figur 2 zeigt ein zweites Ausführungsbeispiel der Vorrichtung 1 zur Absicherung eines Gefahrenbereichs 2 einer Anlage, wobei Figur 2 eine Seitenansicht des Gefahrenbereichs 2 zeigt.

Die Vorrichtung 1 gemäß Figur 2 unterscheidet sich von der Ausführungsform gemäß Figur 1 nur hinsichtlich der Ausbildung und Anbringung der Sensoranordnung. Ansonsten stimmt die Vorrichtung 1 gemäß Figur 2 mit der Vorrichtung 1 gemäß Figur 1 hinsichtlich Anordnung und Funktion völlig überein.

Die Sensoranordnung gemäß Figur 2 besteht aus einem optischen Sensor in Form eines Kamera-Sensors 8, der oberhalb des Schutzbereichs 3 angeordnet ist. Der Kamera-Sensor 8 umfasst eine Kamera 9, die beispielsweise von einer von einem matrixförmigen CCD- oder CMOS-Ausgang gebildet sein kann. Weiterhin umfasst der Kamera-Sensor 8 eine Beleuchtungseinheit 10 und eine nicht dargestellte Auswerteeinheit. Der Kamera-Sensor 8 kann insbesondere als 3D-Kamerasystem ausgebildet sein. Dann werden von der Beleuchtungseinheit 10 emittierte Sendelichtstrahlen zur Durchführung von Distanzmessungen für alle Pixel der Kamera 9 genutzt.

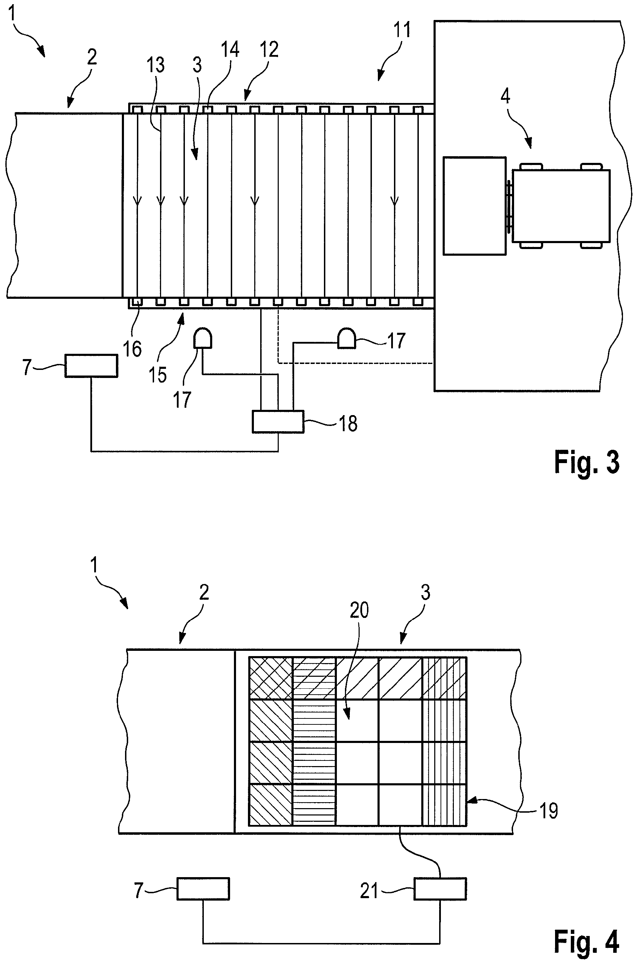

Figur 3 zeigt ein drittes Ausführungsbeispiel der Vorrichtung 1 zur Absicherung eines Gefahrenbereichs 2 einer Anlage, wobei Figur 3 eine Draufsicht auf den Gefahrenbereich 2 zeigt.

Die Vorrichtung 1 gemäß Figur 3 unterscheidet sich von der Ausführungsform gemäß Figur 1 nur hinsichtlich der Ausbildung und Anbringung der Sensoranordnung. Ansonsten stimmt die Vorrichtung 1 gemäß Figur 3 mit der Vorrichtung 1 gemäß Figur 1 hinsichtlich Anordnung und Funktion völlig überein.

Die Sensoranordnung weist in diesem Fall einen Lichtvorhang 11 auf, der eine Sendereinheit 12 mit einer Anordnung von Lichtstrahlen 13 emittierenden Sendern 14 und eine Empfängereinheit 15 mit einer Anordnung von Lichtstrahlen 13 empfangenden Empfängern 16. Die Sendereinheit 12 und die Empfängereinheit 15 befinden sich an gegenüberliegenden seitlichen Rändern des Schutzbereichs 3, wobei deren Längsachsen horizontal ausgerichtet sind. Die Sender 14 und Empfänger 16 bilden jeweils Paare, die durch eine optische Synchronisierung zyklisch einzeln nacheinander aktiviert werden. Bei leerem Schutzbereich 3 gelangen die Lichtstrahlen 13 des Senders 14 eines Paares ungehindert zum Empfänger 16 dieses Paares. Das Eindringen eines Objekts in den Schutzbereich 3 wird dadurch erkannt, dass die Lichtstrahlen 13 wenigstens eines Paares durch den Objekteingriff unterbrochen werden.

Durch das Registrieren gleichzeitiger unterbrochener Lichtstrahlen 13 des Lichtvorhangs 11 kann die Größe eines Objekts bestimmt werden. So kann beispielsweise eine Person von einem Fahrzeug, wie dem dargestellten Gabelstapler 4, unterschieden werden. Hierzu ist vorzugsweise die Anbringhöhe der Sendereinheit 12 und der Empfängereinheit 15 des Lichtvorhangs 11 so gewählt, dass die Lichtstrahlen 13 oberhalb der Räder des Gabelstaplers 4 geführt sind, so dass mit den Lichtstrahlen 13 die Karosserie des Gabelstaplers 4 als großer zusammenhängender Bereich erfasst werden kann, der von einer Person gut unterschieden werden kann.

Um Konturen von Objekten noch genauer erkennen zu können, kann dem Lichtvorhang 11, wie in Figur 3 dargestellt, optimal eine Anordnung von scannenden Lichttastern 17 als weitere Bestandteile der Sensoranordnung zugeordnet sein.

Die Sensorsignale des Lichtvorhangs 11 und der Lichttastern 17 werden in einer Rechnereinheit 18 als gemeinsamer Auswerteeinheit ausgewertet. Die Rechnereinheit 18 ist an die Steuerung 7 angeschlossen.

Figur 4 zeigt ein viertes Ausführungsbeispiel der Vorrichtung 1 zur Absicherung eines Gefahrenbereichs 2 einer Anlage, wobei Figur 4 den Gefahrenbereich 2 in einer Draufsicht zeigt.

Die Vorrichtung 1 gemäß Figur 4 unterscheidet sich von der Ausführungsform gemäß Figur 1 nur hinsichtlich der Ausbildung und Anbringung der Sensoranordnung. Ansonsten stimmt die Vorrichtung 1 gemäß Figur 4 mit der Vorrichtung 1 gemäß Figur 1 hinsichtlich Anordnung und Funktion völlig überein.

Die Sensoranordnung gemäß Figur 4 umfasst einen Trittmattensensor 19 mit einer den Schutzbereich 3 absteckenden matrixförmigen Anordnung von Trittmattenfeldern 20. Steht ein Objekt auf einem Trittmattenfeld 20, wird in der die Auswerteeinheit bildenden Rechnereinheit 21 ein charakteristisches Signal dieses Trittmattenfeldes 20 registriert. Dadurch ist eine ortsaufgelöste Objektdetektion möglich. Die Rechnereinheit 21 ist an die Steuerung 7 angeschlossen.

Mit der Sensoranordnung der erfindungsgemäßen Vorrichtung 1 wird generell eine weitere Sicherheitsfunktion derart realisiert, dass, nachdem die Anlage stillgesetzt wurde, anhand von Sensorsignalen der Sensoranordnung erfasst wird, ob sich ein Objekt gemäß einem bestimmten, gültigen Bewegungsablauf aus dem Schutzbereich 3 herausbewegt. Ist dies der Fall, wird ein Freigabesignal generiert, durch das ein automatischer Wideranlauf der Anlage initiiert wird. Darüber hinaus ist ein nicht dargestelltes manuell betätigbares Betätigungselement vorgesehen, durch dessen eine Bedienperson den Wiederanlauf durchführen kann, wenn zum Beispiel die Bedingungen für den automatischen Wiederanlauf erfüllt sind.

Das Freigabesignal kann in der Sensoranordnung generiert werden und an die Steuerung 7 übertragen werden. Alternativ können Sensorsignale der Sensoranordnung über ein sicheres Bussystem in die Steuerung 7 eingelesen werden, wo dann das Freigabesignal generiert wird.

Generell sind zur Generierung des Freigabesignals in der Sensoranordnung oder in der Steuerung 7 Kriterien für den gültigen Bewegungsablauf hinterlegt.

Insbesondere werden zur Detektion derartiger Kriterien der Schutzbereich in Teilzonen 22, 23, 22a, 22b 23a, 23b, 24a, 24b unterteilt. Als Kriterium für den gültigen Bewegungsablauf sind vorgegebene zeitliche Abfolgen von Objekteingriffen in den Teilzonen 22, 23, 22a, 22b 23a, 23b, 24a, 24b definiert.

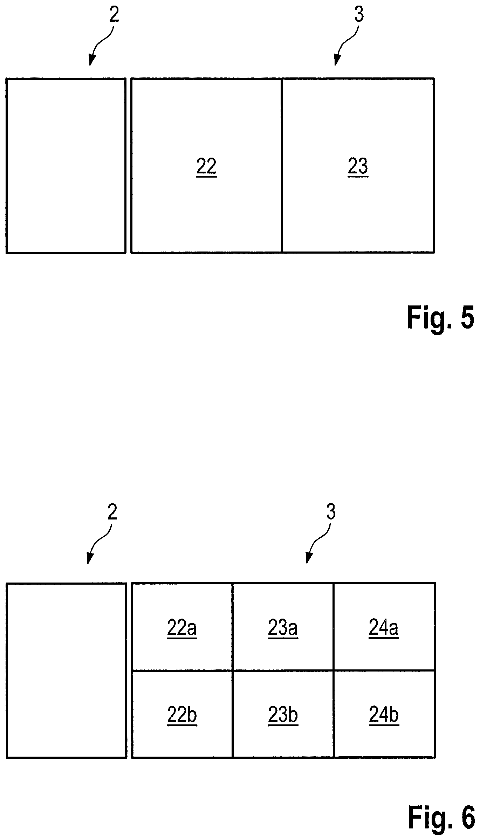

In diesem Fall wird mit der Sensoranordnung erfasst, wann ein Objekt in welche Teilzone 22, 23, 22a, 22b 23a, 23b, 24a, 24b eindringt, wie im Folgenden anhand der Figuren 5 und 6 erläutert.

Figur 5 zeigt ein erstes Beispiel, bei welchem der Schutzbereich 3 in zwei Teilzonen 22, 23 unterteilt ist. Die erste Teilzone 22 grenzt dicht an den Gefahrenbereich 2 an. Die zweite Teilzone 23 schließt in größerer Entfernung zum Gefahrenbereich 2 an die erste Teilzone 22 an.

Mit den so definierten Teilzonen 22, 23 wird ein gültiger Bewegungsablauf einer Person erfasst. Ein solcher liegt vor, wenn sie bei Eindringen in den Schutzbereich 3 zuerst die Teilzone 23 und dann die Teilzone 22 betritt und danach bei Verlassen des Schutzbereichs 3 zunächst in der Teilzone 22 und dann in der Teilzone 23 detektiert wird.

Wird ein solcher gültiger Bewegungsablauf festgestellt, erfolgt der automatische Wiederanlauf der Anlage.

Figur 6 zeigt ein erstes Beispiel, bei welchem der Schutzbereich 3 in insgesamt sechs Teilzonen 22a, 22b, 23a, 23b, 24a, 24b unterteilt ist. Zwei nebeneinanderliegende erste Teilzonen 22a, 22b grenzen an den Gefahrenbereich 2 an. An diese ersten Teilzonen 22a, 22b schließen zwei weitere nebeneinanderliegende Teilzonen 23a, 23b an, an welche wiederum zwei nebeneinanderliegende Teilzonen 24a, 24b anschließen.

Diese Teilzonen-Anordnung dient zur Feststellung eines gültigen Bewegungsablaufs des Gabelstaplers 4. Dieser wird bereits durch die Art der Teilzonen-Aufteilung selbst sicher von einer Person unterschieden.

Hierzu sind die Teilzonen 22a, 22b, 23a, 23b, 24a, 24b so beschaffen, dass sie nur vom Gabelstapler 4, nicht jedoch von einer Person gleichzeitig ersucht werden können.

Ein Fahrzeug wird insbesondere dadurch erkannt, dass dieses in zwei nebeneinanderliegenden Teilzonen 22a, 22b, 23a, 23b, 24a, 24b erfasst wird.

Die zeitliche Folge und die Gesamtanzahl von vom Fahrzeug abgedeckten Teilzonen 22a, 22b, 23a, 23b, 24a, 24b ergeben sich aus der Größe und Geschwindigkeit des Fahrzeugs.

Mit den so angepassten Teilzonen 22a, 22b, 23a, 23b, 24a, 24b kann exakt ein gültiger Bewegungsablauf vorgegeben und kontrolliert werden, wobei bei Registrieren des gültigen Bewegungsablaufs der automatische Wiederanlauf der Anlage erfolgt.

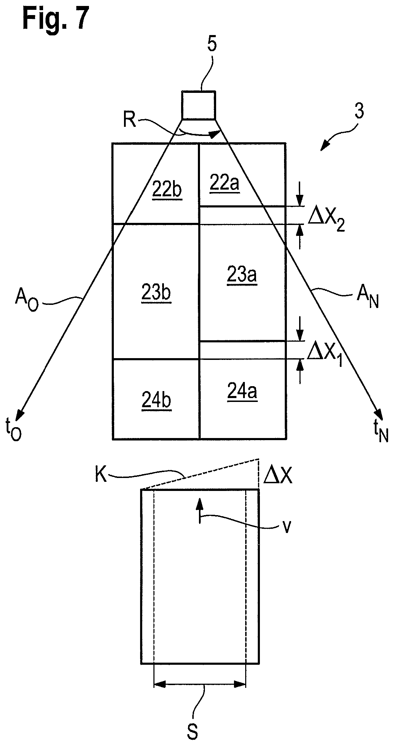

Figur 7 zeigt ein weiteres Ausführungsbeispiel eines Schutzbereichs, der in Teilzonen 22a, 22b, 23a, 23b, 24a, 24b unterteilt ist. Im Unterschied zur Ausführungsform gemäß der Figur 6 weisen die Teilzonen 23a, 24a gegenüber den Teilzonen 23b, 24b einen Versatz Δ*x*₁ beziehungsweise Δ*x*₂ auf, wobei Δ*x*₁ = Δ*x*₂.

Dieser Versatz trägt der zu unterschiedlichen Zeiten abgetasteten Frontseite eines Transportfahrzeugs 25 mit der Spurbreite S Rechnung. Durch die Ablenkbewegung der Sendelichtstrahlen des Flächendistanzsensors 5 wird, wie Figur 7 zeigt, ein Abtastbereich in Scanrichtung R sukzessive mit von Sendelichtstrahlen gebildeten Abtaststrahlen A_{O} ... A_{N} abgetastet. Dabei sind die Ablenkstrahlen Ao, A_{N} nur exemplarisch dargestellt. Typischerweise umfasst der Scanbereich des Flächendistanzsensors 5 einen Winkelbereich von wenigstens 180°. Infolge der Scanbewegung liegt der Zeitpunkt to des Abtaststrahls Ao zeitlich vor dem Zeitpunkt t_{N} des Abtaststrahls A_{N}. Demzufolge wird die linke Vorderkante des Transportfahrzeugs zu einem Zeitpunkt t₁ erfasst, der vor dem Zeitpunkt t₂ liegt, zu welchem die rechte Vorderkante des Transportfahrzeugs erfasst wird.

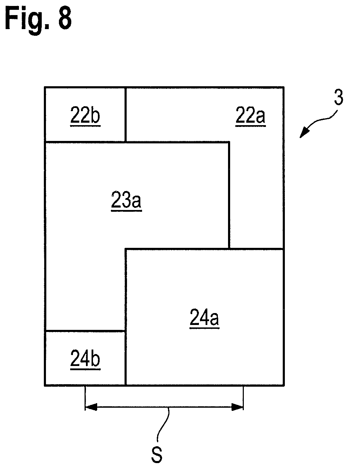

Infolge der Geschwindigkeit V des Transportfahrzeugs hat sich das Transportfahrzeug vom Zeitpunkt t₁ bis zum Zeitpunkt t₂ um Δ*x = V* . (*t*₂ - *t*₁) weiterbewegt. Entsprechend diesem Versatz Δ*x* "sieht" der Flächendistanzsensor 5 nicht die reale Frontseite des Transportfahrzeugs, sondern eine entsprechend dem Versatz Δ*x* geneigte Kontur K, wie in Figur 8 veranschaulicht. Um diesen Effekt auszugleichen, sind die Teilzonen 23a, 24a um den Versatz Δ*x*₁ beziehungsweise Δ*x*₂ gegenüber den Teilzonen 23b, 24b versetzt, wobei Δ*x*₁ = Δ*x*₂ = Δ*x*.

Damit wird als gültiger Bewegungsablauf für das Transportfahrzeug definiert, dass der Flächendistanzsensor 5 gleichzeitig den Übergang von Teilzone 24a in Teilzone 23a und von Teilzone 24b in Teilzone 23b registrieren muss. Entsprechendes gilt für die Teilzone 23b, 22b beziehungsweise 23a, 22a.

Dieser gültige Bewegungsablauf kann nur für das Transportfahrzeug erhalten werden, nicht jedoch für andere Objekte oder Personen.

Figur 8 zeigt eine Variante der Ausführungsform gemäß Figur 7. Auch hier sind mehrere Teilzonen 22a, 22b, 23a, 24a, 24b vorgesehen, die an ein Transportfahrzeug mit der Spurbreite S angepasst sind.

### Bezugszeichenliste

- (1): Vorrichtung
- (2): Gefahrenbereich
- (3): Schutzbereich
- (4): Gabelstapler
- (5): Flächendistanzsensor
- (6): Distanzsensor
- (7): Steuerung
- (8): Kamera-Sensor
- (9): Kamera
- (10): Beleuchtungseinheit
- (11): Lichtvorhang
- (12): Sendereinheit
- (13): Lichtstrahlen
- (14): Sender
- (15): Empfängereinheit
- (16): Empfänger
- (17): Lichttaster
- (18): Rechnereinheit
- (19): Trittmattensensor
- (20): Trittmattenfeld
- (21): Rechnereinheit
- (22): Teilzone
- (22a - b): Teilzone
- (23): Teilzone
- (23a - b): Teilzone
- (24a - b): Teilzone
- (25): Transportfahrzeug
- A_{O} ... A_{N}: Abtaststrahlen
- to - t_{N}: Zeitpunkt
- K: Kontur
- R: Scanrichtung
- S: Spurbreite
- V: Geschwindigkeit

## Patentansprüche

1. Vorrichtung (1) zur Absicherung eines Gefahrenbereichs (2) einer von einer Steuerung (7) gesteuerten Anlage, mit einer Sensoranordnung, mittels derer ein an den Gefahrenbereich (2) angepasster Schutzbereich (3) überwacht wird, wobei bei Erfassen eines in den Schutzbereich (3) eindringenden Objekts mittels der Sensoranordnung ein Schaltsignal generiert wird, mittels dessen ein gefahrenbringender Betrieb der Anlage stillgesetzt ist, **dadurch gekennzeichnet, dass** mit der Sensoranordnung der Bewegungsablauf des Objekts bei Verlassen des Schutzbereichs (3) erfasst wird, und dass bei Registrieren eines gültigen Bewegungsablaufs mittels der Sensoranordnung ein Freigabesignal generiert wird, mittels dessen der gefahrbringende Betrieb der Anlage wieder aktiviert ist.

2. Vorrichtung (1) nach Anspruch 1, **dadurch gekennzeichnet, dass** die Sensoranordnung einen oder mehrere Sensoren aufweist.

3. Vorrichtung (1) nach Anspruch 2, **dadurch gekennzeichnet, dass** der oder wenigstens ein Sensor ein optischer Sensor oder ein Trittmattensensor (19) ist.

4. Vorrichtung (1) nach Anspruch 3, **dadurch gekennzeichnet, dass** der optische Sensor ein Kamera-Sensor (8), ein Flächendistanzsensor (5) oder ein Lichtvorhang (11) ist.

5. Vorrichtung (1) nach einem der Ansprüche 1 - 4, **dadurch gekennzeichnet, dass** in der Sensoranordnung selbst ein gültiger Bewegungsablauf erkannt wird und abhängig hierzu das Freigabesignal generiert wird.

6. Vorrichtung (1) nach Anspruch 5, **dadurch gekennzeichnet, dass** das Freigabesignal über einen sicheren Schaltausgang der Sensoranordnung an die Steuerung (7) der Anlage ausgegeben wird.

7. Vorrichtung (1) nach einem der Ansprüche 1 - 4, **dadurch gekennzeichnet, dass** in der Sensoranordnung generierte Sensorsignale an die Steuerung (7) ausgegeben werden, und dass in der Steuerung (7) das Freigabesignal bei Erkennen des gültigen Bewegungsablaufs generiert wird.

8. Vorrichtung (1) nach Anspruch 7, **dadurch gekennzeichnet, dass** die Sensorsignale über ein sicheres Bussystem an die Steuerung (7) übertragen werden.

9. Vorrichtung (1) nach einem der Ansprüche 1 - 8, **dadurch gekennzeichnet, dass** in der Sensoranordnung oder in der Steuerung (7) Kriterien für den gültigen Bewegungsablauf hinterlegt sind.

10. Vorrichtung (1) nach einem der Ansprüche 1 - 9, **dadurch gekennzeichnet, dass** der Schutzbereich (3) in Teilzonen (22, 22a, 22b, 23, 23a, 23b, 24a, 24b) unterteilt ist, und dass als Kriterium für den gültigen Bewegungsablauf vorgegebene zeitliche Abfolgen von Objekteingriffen in den Teilzonen (22, 22a, 22b, 23, 23a, 23b, 24a, 24b) definiert sind.

11. Vorrichtung (1) nach Anspruch 10, **dadurch gekennzeichnet, dass** wenigstens eine erste Teilzone (22, 22a, 22b) eine Grenze zum Gefahrenbereich (2) der Anlage enthält, und dass daran anschließend zu größeren Abständen zur Anlage hin, wenigstens eine zweite Teilzone (23, 23a, 23b, 24a, 24b) vorhanden ist.

12. Vorrichtung (1) nach Anspruch 11, **dadurch gekennzeichnet, dass** mehrere nebeneinanderliegende erste und/oder zweite Teilzonen (22a, 22b, 23a, 23b, 24a, 24b) vorgesehen sind.

13. Vorrichtung (1) nach einem der Ansprüche 1 - 12, **dadurch gekennzeichnet, dass** für unterschiedliche Objekte verschiedene gültige Bewegungsabläufe definiert sind.

14. Vorrichtung (1) nach einem der Ansprüche 10 - 13, **dadurch gekennzeichnet, dass** für ein Fahrzeug mittels mehrerer Teilzonen (22a, 22b, 23a, 23b, 24a, 24b) ein gültiger Bewegungsablauf definiert ist, wobei die Teilzonen (22a, 22b, 23a, 23b, 24a, 24b) so dimensioniert sind, dass der gültige Bewegungsablauf nur durch das Fahrzeug generierbar ist, nicht jedoch von anderen Objekten oder Personen.

15. Vorrichtung (1) nach einem der Ansprüche 1 - 14, **dadurch gekennzeichnet, dass** für einen Wiederanlauf der Anlage ein manuell betätigbares Betätigungselement vorgesehen ist.

## Claims

1. A device (1) for protecting a hazardous area (2) of a system controlled by a controller (7), having a sensor arrangement by means of which a protective area (3) adapted to the hazardous area (2) is monitored, a switching signal being generated by means of the sensor arrangement when an object entering the protective area (3) is detected, by means of which a hazardous operation of the installation is stopped, **characterised in that** the sensor arrangement detects the sequence of movement of the object when it leaves the protected area (3), and **in that**, when a valid sequence of movement is registered by means of the sensor arrangement, a release signal is generated by means of which the hazardous operation of the installation is reactivated.

2. A device (1) according to claim 1, **characterised in that** the sensor arrangement comprises one or more sensors.

3. A device (1) according to claim 2, **characterised in that** the or at least one sensor is an optical sensor or a tread mat sensor (19).

4. A device (1) according to claim 3, **characterised in that** the optical sensor is a camera sensor (8), an area distance sensor (5) or a light curtain (11).

5. A device (1) according to one of the claims 1-4, **characterised in that** a valid movement sequence is recognised in the sensor arrangement itself and the release signal is generated in dependence thereon.

6. A device (1) according to claim 5, **characterised in that** the release signal is output to the control (7) of the system via a safe switching output of the sensor arrangement.

7. A device (1) according to one of the claims 1-4, **characterised in that** sensor signals generated in the sensor arrangement are output to the control (7), and **in that** the release signal is generated in the control (7) when the valid movement sequence is detected.

8. A device (1) according to claim 7, **characterised in that** the sensor signals are transmitted to the control (7) via a secure bus system.

9. A device (1) according to one of the claims 1-8, **characterised in that** criteria for the valid movement sequence are stored in the sensor arrangement or in the control (7).

10. A device (1) according to one of the claims 1-9, **characterised in that** the protected area (3) is subdivided into partial zones (22, 22a, 22b, 23, 23a, 23b, 24a, 24b), and **in that** predetermined time sequences of object interventions in the partial zones (22, 22a, 22b, 23, 23a, 23b, 24a, 24b) are defined as criteria for the valid movement sequence.

11. A device (1) according to claim 10, **characterised in that** at least a first sub-zone (22, 22a, 22b) contains a boundary to the hazardous area (2) of the installation, and **in that** at least a second sub-zone (23, 23a, 23b, 24a, 24b) is present at greater distances therefrom towards the installation.

12. A device (1) according to claim 11, **characterised in that** several first and/or second partial zones (22a, 22b, 23a, 23b, 24a, 24b) lying next to one another are provided.

13. A device (1) according to one of the claims 1 - 12, **characterised in that** different valid movement sequences are defined for different objects.

14. A device (1) according to one of the claims 10-13, **characterised in that** a valid movement sequence is defined for a vehicle by means of several sub-zones (22a, 22b, 23a, 23b, 24a, 24b), wherein the sub-zones (22a, 22b, 23a, 23b, 24a, 24b) are dimensioned in such a way that the valid movement sequence can only be generated by the vehicle, but not by other objects or persons.

15. A device (1) according to one of the claims 1 - 14, **characterised in that** a manually operable actuating element is provided for restarting the system.

## Revendications

1. Dispositif (1) de sécurisation d'une zone à risque (2) d'une installation commandée par une commande (7), comportant un agencement de capteurs au moyen duquel une zone de sécurisation (3) adaptée à la zone à risque (2) est surveillée, un signal de commutation étant généré au moyen de l'agencement de capteurs lorsqu'un objet pénétrant dans la zone de sécurisation (3) est détecté, au moyen duquel un fonctionnement dangereux de l'installation est arrêté, **caractérisé en ce que** le dispositif de détection détecte la séquence de mouvement de l'objet lorsqu'il quitte la zone de sécurisation (3), et **en ce que**, lorsqu'une séquence de mouvement valide est enregistrée au moyen du dispositif de détection, un signal de libération est généré au moyen duquel le fonctionnement dangereux de l'installation est réactivé.

2. Dispositif (1) selon la revendication 1, **caractérisé en ce que** l'agencement de capteurs comprend un ou plusieurs capteurs.

3. Dispositif (1) selon la revendication 2, **caractérisé en ce que** le ou au moins un capteur est un capteur optique ou un capteur de tapis de roulement (19).

4. Dispositif (1) selon la revendication 3, **caractérisé en ce que** le capteur optique est un capteur de caméra (8), un capteur de distance surfacique (5) ou un rideau lumineux (11).

5. Dispositif (1) selon l'une des revendications 1 à 4, **caractérisé en ce qu'**une séquence de mouvement valide est reconnue dans l'agencement de capteurs lui-même et le signal de libération est généré en fonction de celle-ci.

6. Dispositif (1) selon la revendication 5, **caractérisé en ce que** le signal de libération est délivré à la commande (7) du système par l'intermédiaire d'une sortie de commutation sûre de l'agencement de capteurs.

7. Dispositif (1) selon l'une des revendications 1 à 4, **caractérisé en ce que** des signaux de capteur générés dans l'agencement de capteurs sont émis vers la commande (7), et **en ce que** le signal de libération est généré dans la commande (7) lorsque la séquence de mouvement valide est détectée.

8. Dispositif (1) selon la revendication 7, **caractérisé en ce que** les signaux des capteurs sont transmis à la commande (7) par un système de bus sécurisé.

9. Dispositif (1) selon l'une des revendications 1 à 8, **caractérisé en ce que** les critères de la séquence de mouvement valide sont mémorisés dans l'agencement de capteurs ou dans la commande (7).

10. Dispositif (1) selon l'une des revendications 1 à 9, **caractérisé en ce que** la zone protégée (3) est divisée en zones partielles (22, 22a, 22b, 23, 23a, 23b, 24a, 24b), et **en ce que** des séquences temporelles prédéterminées d'interventions d'objets dans les zones partielles (22, 22a, 22b, 23, 23a, 23b, 24a, 24b) sont définies comme critères pour la séquence de mouvement valide.

11. Dispositif (1) selon la revendication 10, **caractérisé en ce qu'**au moins une première zone partielle (22, 22a, 22b) contient une limite de la zone à risque (2) de l'installation, et **en ce qu'**au moins une deuxième zone partielle (23, 23a, 23b, 24a, 24b) est présente à des distances plus grandes de celle-ci vers l'installation.

12. Dispositif (1) selon la revendication 11, **caractérisé en ce que** plusieurs premières et/ou secondes zones partielles (22a, 22b, 23a, 23b, 24a, 24b) situées les unes à côté des autres sont prévues.

13. Dispositif (1) selon l'une des revendications 1 - 12, **caractérisé en ce que** différentes séquences de mouvements valides sont définies pour différents objets.

14. Dispositif (1) selon l'une des revendications 10-13, **caractérisé en ce qu'**une séquence de mouvement valide est définie pour un véhicule au moyen de plusieurs sous-zones (22a, 22b, 23a, 23b, 24a, 24b), les sous-zones (22a, 22b, 23a, 23b, 24a, 24b) étant dimensionnées de telle sorte que la séquence de mouvement valide ne peut être générée que par le véhicule, mais pas par d'autres objets ou personnes.

15. Dispositif (1) selon l'une des revendications 1 - 14, **caractérisé en ce qu'**un élément d'actionnement actionnable manuellement est prévu pour redémarrer le système
